# EUROPÄISCHE PATENTSCHRIFT

(11) **EP 0 308 788 B1**
(45) Veröffentlichungstag und Bekanntmachung des Hinweises auf die Patenterteilung: **08.12.1993**
(21) Anmeldenummer: 88114985.0
(22) Anmeldetag: 14.09.1988
(51) Int. Cl.: C07F 7/08

(54) **Verfahren zur Herstellung von (Aryl)-(dimethyl)-(3-(4-fluoro-3-aryloxyphenyl)propyl)silanen**
Process for the preparation of (aryl)-(dimethyl)-(3-(4-fluoro-3-aryloxyphenyl)propyl) silanes
Procédé pour la préparation de (aryl)-(diméthyl)-(3-(4-fluoro-3-aryloxyphényl)propyl) silanes

(30) Priorität: 19.09.1987 DE 3731609
(43) Veröffentlichungstag der Anmeldung: 29.03.1989
(73) Patentinhaber: HOECHST AKTIENGESELLSCHAFT, 65926 Frankfurt am Main (DE)
(72) Erfinder: Schubert, Hans Herbert, Dr., D-6000 Frankfurt am Main 71 (DE)

(56) Entgegenhaltungen:
- EP-A- 0 224 024
- US-A- 3 013 044

## Beschreibung

Gegenstand der vorliegenden Erfindung ist ein Verfahren zur Herstellung von Verbindungen der Formel I 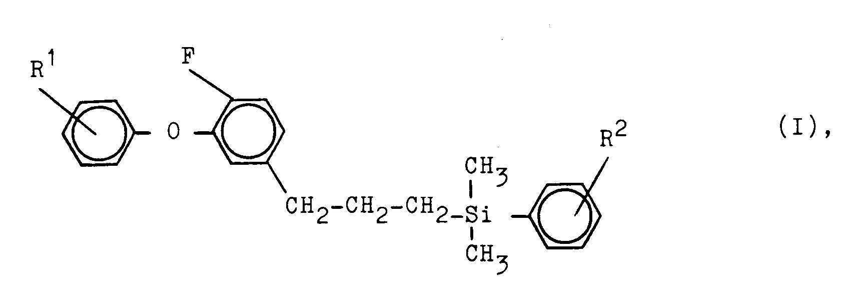
worin
- R¹ =: H, Halogen, (C₁-C₄)-Alkyl oder (C₁-C₄)-Alkoxy und
- R² =: H, Halogen, (C₁-C₄)-Alkyl, (C₁-C₄)-Alkylthio, (C₁-C₄)-Alkoxy oder die bivalente Gruppe 3,4-O-CH₂-O bedeuten, dadurch gekennzeichnet, daß man eine Verbindung der Formel II 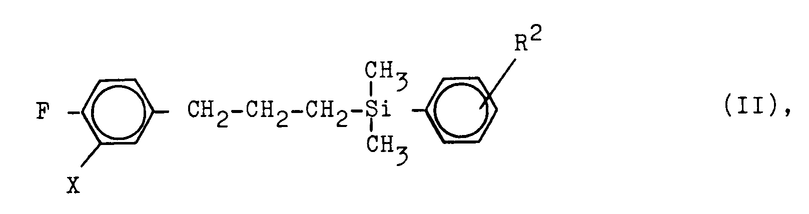
worin X = Halogen bedeutet und R² die Bedeutung wie in Formel I besitzt, in Gegenwart eines Kupferkatalysators mit einem Alkali- oder Erdalkaliphenolat der Formel III 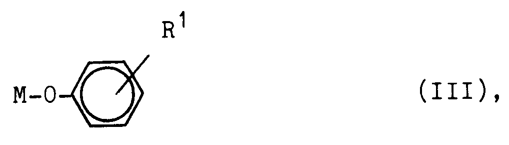
worin M = Alkali- oder Erdalkalimetall bedeutet und R¹ die Bedeutung wie in Formel I besitzt, umsetzt.

Bevorzugt bedeutet bei den Verbindungen der Formel II X = Cl.

Die Verbindungen der Formeln I und II sind bekannt und besitzen als insektizide, akarizide und nematozide Wirkstoffe Bedeutung (EP-A-02 24 024).

Die bisher bekannten Synthesewege zu den Verbindungen der Formel I gehen z.B. von aufwendig herzustellenden Olefinen der Formel A 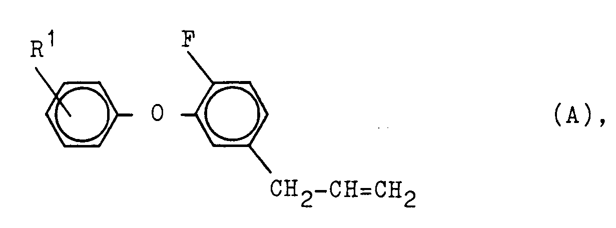
worin R¹ die Bedeutung wie in Formel I besitzt, als Edukte aus, die dann durch Hydrosilyierung in die entsprechenden Silane der Formel I überführt werden (EP-A-02 24 024).

Die Ausgangsverbindungen der Formel II des erfindungsgemäßen Verfahrens lassen sich aus den entsprechenden Allylbenzolen der Formel B 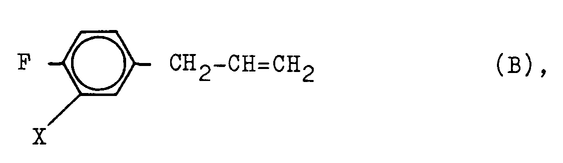
worin X = Halogen bedeutet, durch Umsetzung mit einem Silan der Formel C 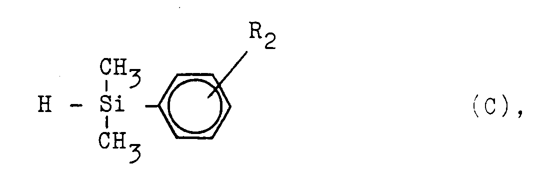
worin R² die Bedeutung wie in Formel I besitzt, in Gegenwart einer Komplexverbindung eines Elementes der VIII Nebengruppe des Periodensystems als Katalysator selektiv und in hohen Ausbeuten erhalten. Diese Umsetzung als auch die Herstellung der Verbindungen der Formel B ausgehend von geeigneten metallorganischen Zwischenstufen sind ebenfalls in der EP-A-02 24 024 beschrieben.

Alternativ existiert ein weiterer, sehr einfacher Weg um die Verbindungen der Formel B herzustellen. Die Synthese geht aus von 3-Chlor-4-fluoranilin oder dem leicht aus 4-Fluoranilin durch Halogenierung in Gegenwart eines "Swamp-Katalysators" (AlCl₃/HClgas) erhältlichen 3-Brom-4-fluoranilin bzw. 3-Jod-4-fluoranilin. Bevorzugt wird hierbei die Brom- oder Chlorverbindung, besonders bevorzugt die Bromverbindung verwendet. Die aus diesen Edukten erhältlichen Diazoniumsalze lassen sich in guten Ausbeuten unter reduzierenden Bedingungen mit Acrolein zu 3-Phenylpropanalen der Formel D alkylieren 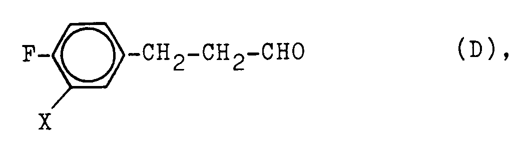
worin X = Halogen bedeutet.
Deren reduktive Aminierung (z.B. Umsetzung mit Dimethylamin und Wasserstoff in Gegenwart eines Katalysators oder mit Dimethylformamid und Ameisensäure) liefert die 3-Arylpropyl-dimethylamine der Formel E 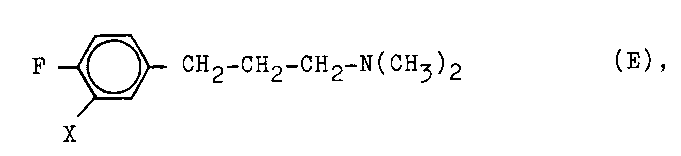
worin X = Halogen bedeutet. Diese werden durch H₂O₂ oder Persäuren in die entsprechenden Aminoxide überführt, aus welchen dann durch Pyrolyse die Verbindungen der Formel B resultieren.

Insgesamt lassen sich die als Ausgangsstoffe für das erfindungsgemäße Verfahren dienenden Verbindungen der Formel II sowie alle zu deren Herstellung notwendigen Vorläufer in enger Anlehnung an literaturbekannte Reaktionen herstellen:
A. Citterio, Org. Synth. 62, 67 (1984); E. Möller, R. Schröter, Methoden der org. Chemie (Houben-Weyl) Bd. XI/1, 648-664, (1957); A.C. Cope, C.L. Bumgardner, J. Amer. Chem. Soc. 79, 960 (1957)); s. Methoden der org. Chemie (Houben-Weyl), Bd. XIII/5, Georg Thieme Verlag, Stuttgart 1980; E. Pfeil, Angew. Chem. 65, 155-158 (1953); H.H. Hodgson, Chem. Rev. 40, 251-277 (1947); H. Fricke, Methoden der org. Chemie (Houben-Weyl), Bd. V/1b, 465-476 (1972).

Ausgehend von den Verbindungen der Formel II war beim erfindungsgemäßen Verfahren insbesondere die selektive und mit guten Ausbeuten verlaufende Bildung der Verbindungen der Formel I überraschend. Im Gegensatz zu anderen, literaturbekannten Umsetzungen von Fluorhalogenaromaten mit Phenolaten, bei denen bevorzugt das Fluor und nicht das andere Halogen ausgetauscht wird (vgl. DE-OS 2 619 489, US-PS 3 637 866), läßt sich hier insbesondere im Falle der Bromfluor- und Jodfluoraromaten der Formel II glatt das weniger elektronegative Halogen substituieren. Besonders überraschend war die selektive Umsetzung der Chlorfluoraromaten der Formel II in nichtbasischen Lösungsmitteln, da nicht aktivierte Chloraromaten üblicherweise die kupfersalzkatalysierte Phenoxylierung nur in Gegenwart basischer Solventien wie Pyridin oder Chinolin eingehen (R.G. Bacon, H.A. Hill, J. Chem. Soc. 1964, 1108). In anderen Fällen ist die Gegenwart eines Cokatalysators notwendig (G. Soula, J. Org. Chem. 50, 3717 (1985)).

Die besten Ausbeuten werden beim erfindungsgemäßen Verfahren erzielt, wenn man die Umsetzung in schwach polaren, aprotischen Solventien wie z.B. Polyethylenglykoldialkylethern bei Temperaturen zwischen 100°C und 255°C durchführt, wobei der optimale Temperaturbereich und das Lösungsmittel mit dem zu ersetzenden Halogen variieren.

Während der Jodfluoraromat der Formel II bereits bei Temperaturen von 100 - 160°C, bevorzugt bei 130 - 160°C, in Diethylenglykoldimethylether zur Reaktion gebracht werden kann, sind zur Umsetzung des Chlorfluoraromaten höher siedende Lösungsmittel wie z.B. Triglyme oder Tetraglyme und Temperaturen von 190-255°C, bevorzugt 220-250°C, notwendig. Der Bromfluoraromat reagiert z.B. in Diglyme oder Triglyme, aber auch in Diethylenglykoldiethylether bei Temperaturen von 145-210°C, bevorzugt bei 145-190°C, mit Phenolaten.

Die Umsetzung der Verbindungen der Formel II mit denen der Formel III erfolgt in Gegenwart eines Katalysators, der Kupfer in unterschiedlichen Oxidationsstufen enthält. Bevorzugt sind die Oxidationsstufen Cu° und Cu¹⁺. Beispiele für einen solchen Katalysator sind Kupferpulver, Kupfer(I)-oxid, Kupfer(I)chlorid und Kupfer(I)bromid, von denen Kupfer(I)oxid, Kupfer(I)chlorid und Kupfer(I)bromid bevorzugt verwendet werden.

Pro Mol eines Halogenfluoraromaten der Formel III werden 1-1,6 Mol, bevorzugt 1-1,4 Mol, eines Alkali- oder Erdalkaliphenolates, bevorzugt eines Natrium- oder Kaliumphenolates, eingesetzt. Die notwendige Menge des Kupferkatalysators schwankt allgemein zwischen 1-20 g. Die Aufarbeitung des Reaktionsproduktes (Verbindung der Formel I) geschieht auf übliche Weise z.B. durch Filtration, Verdünnen des Filtrates mit einem mit Wasser nicht mischbaren Lösungsmittel und Waschen der Lösung mit verdünnter Natronlauge und Wasser. Nach Trocknung und Filtration wird das Lösungsmittel abgedampft und der Rückstand unter Vakuum destilliert.

Das erfindungsgemäße Verfahren wird durch die nachfolgenden Beispiele verdeutlicht:

### Ausführungsbeispiele

### A) Herstellung einer Verbindung der Formel B

1) 145.6 g (1.00 Mol) 3-Chlor-4-fluoranilin werden in einem Gemisch aus 330 ml 48%iger Bromwasserstoffsäure und 330 ml Wasser gelöst und bei 5°C durch Zutropfen einer Lösung von 70,4 g (1,02 Mol) Natriumnitrit in 220 ml Wasser diazotiert. Die so erhaltene Diazoniumsalzlösung wird zu einer 30-40°C warmen Mischung aus 188 g (1,3 Mol) Kupfer(I)bromid und 400 ml 48%iger Bromwasserstoffsäure getropft. Nach Abschluß der Gasentwicklung wird das Produkt mit drei 300 ml-Portionen Hexan extrahiert. Man wäscht die Auszüge zweimal mit 5N-Natronlauge und einmal mit Wasser, trocknet über Natriumsulfat und dampft ein. Der Rückstand liefert bei der anschließenden Destillation 187,2 g (89 %) 4-Brom-2-chlorfluorbenzol vom Kp₁₀ = 73-75°C und einer Reinheit > 99 % (gaschromatographisch bestimmt).
2) Aus 406 g (1,94 Mol) 4-Brom-2-chlorfluorbenzol und 48,6 g (2,00 Mol) Magnesiumspänen wird nach dem üblichen Verfahren in 1300 ml wasserfreiem Tetrahydrofuran das entsprechende Arylmagnesiumbromid bereitet. Die so erhaltene Lösung tropft man zu einer 30-45°C warmen Lösung von 278,3 g (2,3 Mol) Allylbromid in 200 ml wasserfreiem Tetrahydrofuran. Dann erhitzt man 0,5 h unter Rückfluß, läßt 16 h bei Raumtemperatur stehen und gießt auf 1,5 l Eiswasser. Nach Ansäuern mit wenig 2N-Salzsäure extrahiert man die Mischung zweimal mit je 1 l Hexan. Die Auszüge werden dreimal mit Wasser gewaschen, über Na₂SO₄ getrocknet und eingedampft. Der Rückstand liefert bei der anschließenden Destillation 235 g (71 %) 3-(3-Chlor-4-fluorphenyl)propen vom Kp₁₀ = 72°C und einer Reinheit von 98,7 % (gaschromatographisch bestimmt).

### B) Herstellung einer Verbindung der Formel II

Zu einer Mischung aus 234 g (1,37 Mol) 3-(3-Chlor-4-fluorphenyl)propen und 261 g (1,45 Mol) (4-Ethoxyphenyl)-dimethylsilan gibt man mit Hilfe einer Pipette drei Tropfen einer 30%igen Lösung von Hexachlorplatinsäure in Isopropanol. Nach kurzer Zeit erfolgt eine exotherme Reaktion und das Gemisch erwärmt sich auf ca. 130°C. Nach dem Erkalten wird das Produkt im Vakuum destilliert. Man erhält 392 g (82 %) (4-Ethoxyphenyl)-(dimethyl)-(3-(3-chlor-4-fluorphenyl)propyl)silan als farbloses Öl vom Kp_{0.1} = 165-170°C, dessen Reinheit gaschromatographisch zu 97,4 % bestimmt wurde.

### C) Herstellung einer Verbindung der Formel I

Eine Mischung aus 456,2 g (1,30 Mol) (4-Ethoxyphenyl)-(dimethyl)-(3-(3-chlor-4-fluorphenyl)propyl)silan, 232,2 g (2,00 Mol) Natriumphenolat, 13 g Kupfer(I)chlorid und 500 ml Tetraglyme wird 1,5 h auf 240-255°C erhitzt. Nach Abkühlen der Reaktionsmischung auf 90°C destilliert man einen Großteil des Lösungsmittels bei 90-140°C Innentemperatur und 0,4 Torr ab (ca. 400 g). Das Rohprodukt wird sodann bei Raumtemperatur mit 500 ml 2N-Natronlauge verrührt und zweimal mit je 800 ml Hexan extrahiert. Die organischen Auszüge wäscht man fünfmal mit je 300 ml Wasser, trocknet über Natriumsulfat und dampft ein. Das so erhaltene Rohprodukt (486,1 g/92 %) wird über eine 50 cm-Spaltrohrkolonne destilliert. Man erhält 233 g (44 %) (4-Ethoxyphenyl)-(dimethyl)-(3-(4-fluoro-3-phenoxyphenyl)-propyl)silan als farbloses Öl vom Kp_{0,04} = 208-212°C, dessen Reinheit gaschromatographisch zu 95,2 % bestimmt wurde.

## Patentansprüche

1. Verfahren zur Herstellung von Verbindungen der Formel I 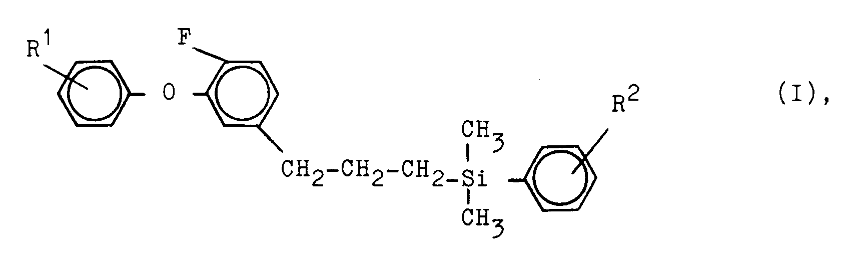 worin
R¹ = H, Halogen, (C₁-C₄)-Alkyl oder (C₁-C₄)-Alkoxy und
R² = H, Halogen, (C₁-C₄)-Alkyl, (C₁-C₄)-Alkylthio, (C₁-C₄)-Alkoxy oder die bivalente Gruppe 3,4-O-CH₂-O bedeuten, dadurch gekennzeichnet, daß man eine Verbindung der Formel II 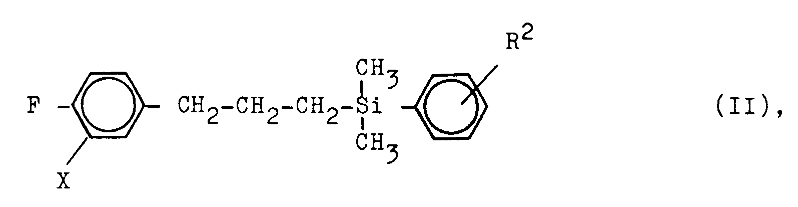
worin X = Halogen bedeutet und R² die Bedeutung wie in Formel I besitzt, in Gegenwart eines Kupferkatalysators mit einem Alkali- oder Erdalkaliphenolat der Formel III 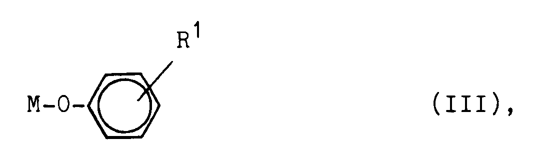 worin M = Alkali- oder Erdalkalimetall bedeutet und R¹ die Bedeutung wie in Formel I besitzt, umsetzt.

2. Verfahren gemäß Anspruch 1, dadurch gekennzeichnet, daß in Formel II X = Cl bedeutet.

3. Verfahren gemäß Anspruch 1 oder 2, dadurch gekennzeichnet, daß man die Verbindung der Formel II mit der Verbindung der Formel III zwischen 100°C und 255°C umsetzt.

4. Verfahren gemäß einem oder mehreren der Ansprüche 1 bis 3, dadurch gekennzeichnet, daß man für die Umsetzung der Verbindung der Formel II mit der Verbindung der Formel III Polyethylenglykoldialkylether als Lösungsmittel verwendet.

5. Verfahren gemäß einem oder mehreren der Ansprüche 1 bis 4, dadurch gekennzeichnet, daß als Katalysator CuCl, CuBr oder Cu₂O verwendet wird.

6. Verwendung der Verbindungen der Formel II von Anspruch 1 zur Herstellung von Pflanzenschutzmittel-Wirkstoffen.

## Claims

1. A process for the preparation of compounds of the formula I 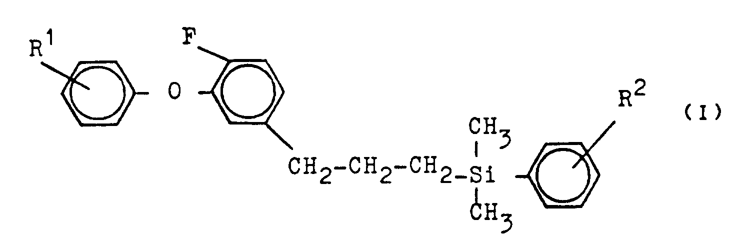 in which
R¹ denotes H, halogen, (C₁-C₄)-alkyl or (C₁-C₄)-alkoxy and
R² denotes H, halogen, (C₁-C₄)-alkyl, (C₁-C₄)-alkylthio, (C₁-C₄)-alkoxy or the bivalent group 3,4-O-CH₂-O, which comprises reacting a compound of the formula II 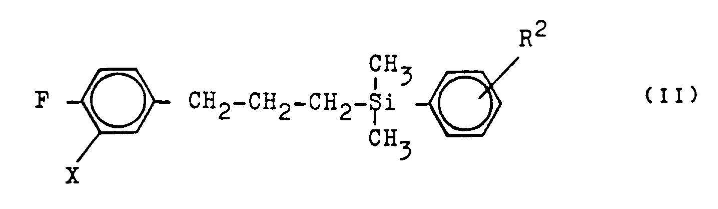
in which X denotes halogen and R² has the meaning as in formula I, in the presence of a copper catalyst with an alkali metal phenolate or alkaline earth metal phenolate of the formula III 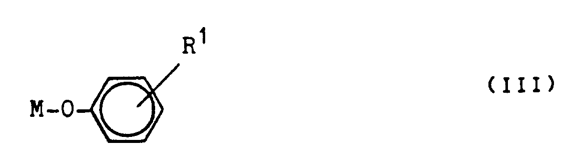 in which M denotes an alkali metal or an alkaline earth metal and R¹ has the meaning as in formula I.

2. The process as claimed in claim 1, wherein X denotes Cl in formula II.

3. The process as claimed in claim 1, wherein the compound of the formula II is reacted with the compound of the formula III between 100°C and 255°C.

4. The process as claimed in claim 1, wherein polyethylene glycol dialkyl ethers are used as solvents for the reaction of the compound of the formula II with the compound of the formula III.

5. The process as claimed in claim 1, wherein CuCl, CuBr or Cu₂O is used as a catalyst.

6. The use of compounds of the formula II of claim 1 for the preparation of plant protection agent active compounds.

## Revendications

1. Procédé de préparation de composés de formule I : 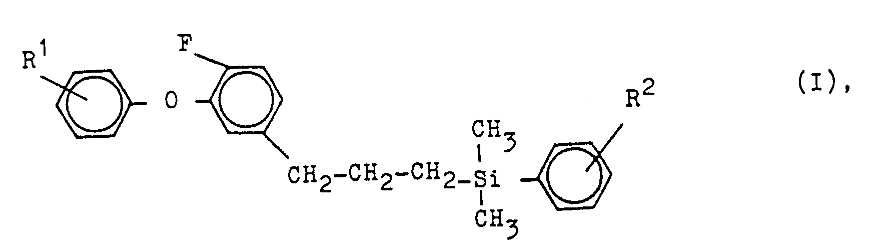 dans laquelle,
R¹ représente H, un atome d'halogène, un groupe alkyle en C₁ à C₄ ou alcoxy en C₁ à C₄, et
R² représente H, un atome d'halogène, un groupe alkyle en C₁ à C₄, un groupe alkylthio en C₁ à C₄, alcoxy en C₁ à C₄ ou le groupe divalent 3,4-O-CH₂-O, procédé caractérisé en ce que l'on fait réagir un composé de formule II, 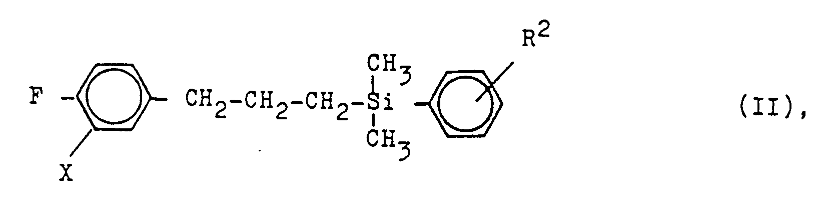
(dans laquelle X représente un atome d'halogène, et R² a le même sens que pour la formule I), en présence d'un catalyseur à base de cuivre, avec un phénolate alcalin ou alcalino terreux de formule III 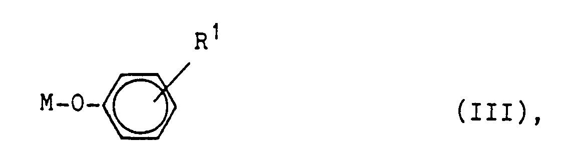 dans laquelle M représente un métal alcalin ou alcalino terreux, et R¹ a le même sens que dans le cas de la revendication 1.

2. Procédé selon la revendication 1, caractérisé en ce que dans la formule II, le symbole X représente Cl.

3. Procédé selon la revendication 1 ou 2, caractérisé en ce qu'on fait réagir entre 100°C et 255 °C le composé de formule II avec le composé de formule III.

4. Procédé selon une ou plusieurs des revendications 1 à 3, caractérisé en ce que, pour la réaction du composé de formule II avec le composé de formule III, on utilise comme solvant un éther dialkylique de polyéthylène glycol.

5. Procédé selon une ou plusieurs des revendications 1 à 4, caractérisé en ce qu'on utilise comme catalyseur CuCl, CuBr ou Cu₂O.

6. Utilisation de composés de formule II de la revendication 1 pour préparer des substances actives pour des produits phytosanitaires de protection des plantes.
